# EUROPÄISCHE PATENTSCHRIFT

(11) **EP 3 422 842 B1**
(45) Veröffentlichungstag und Bekanntmachung des Hinweises auf die Patenterteilung: **06.05.2026**
(21) Anmeldenummer: 17709022.2
(22) Anmeldetag: 01.03.2017
(51) Int. Cl.: A01K 1/12

(54) **MELKSTAND MIT EINER ANTRIEBSANORDNUNG FÜR MELKSTANDTORE**
MILKING PARLOR COMPRISING A DRIVING ASSEMBLY FOR MILKING PARLOR GATES
BOX DE TRAITE POURVU D'UN DISPOSITIF D'ENTRAÎNEMENT POUR DES PORTES DE BOX DE TRAITE

(30) Priorität: 01.03.2016 DE 202016101095 U
(43) Veröffentlichungstag der Anmeldung: 09.01.2019
(73) Patentinhaber: GEA Farm Technologies GmbH, 59199 Bönen (DE)
(72) Erfinder: MADER, Thomas, 33378 Rheda-Wiedenbrück (DE)
(74) Vertreter: Kleine, Hubertus
(86) Internationale Anmeldenummer: PCT/EP2017/054721
(87) Internationale Veröffentlichungsnummer: WO 2017/148988

(56) Entgegenhaltungen:
- WO-A1-00/13496
- WO-A1-2015/059439
- US-A- 5 392 731

## Beschreibung

Die Erfindung betrifft einen Melkstand mit einer Antriebsanordnung für Melkstandtore nach dem Oberbegriff des Anspruchs 1.

Ein Melkstand wird zum maschinellen Melken von milchgebenden Tieren verwendet.

Milchgebende Tiere sind beispielsweise Kühe, Büffel, Ziegen, Schafe usw. Ein Melkvorgang kann mittels so genannter Melkroboter automatisiert werden. Der Melkstand kann als Einzelmelkstand eingesetzt werden. Es sind aber auch Anordnungen mit zwei oder mehr Melkständen möglich.

Melkstandkomponenten sind beispielsweise Melkeinheiten, Versorgungseinheiten, Tore, Gatter, Bodenplatten und dergleichen.

Eine Melkeinheit wird auch als Platzteiler oder Seitengitter bezeichnet. Die Melkeinheit weist den Melkroboter und dazugehörige Antriebe auf.

WO 2013/135842 A1 beschreibt einen Platzteiler einer Melkstandanordnung für mindestens einen Melkstand zum Melken von milchgebenden Tieren. Eine Armeinrichtung mit einem Melkzeug, die in einer Parkposition in dem Platzteiler angeordnet ist, wird angegeben. WO 2015/059439 A1 offenbart einen weiteren Melkstand aus dem Stand der Technik.

Aufgrund steigender Anforderungen, insbesondere nach hohen Durchsatzzahlen, kontinuierlichem und wartungsarmen Betrieb besteht ein ständiger Bedarf für verbesserte Melkstände mit reduzierten Kosten.

Vor diesem Hintergrund besteht die Aufgabe der Erfindung darin, einen verbesserten Melkstand anzugeben.

Diese Aufgabe wird durch einen Melkstand mit den Merkmalen des Anspruchs 1 gelöst.

Ein erfindungsgemäßer Melkstand zum Melken, insbesondere zum automatisierten Melken, von milchgebenden Tieren, umfasst eine Säule, eine Torsäule mit einem verschwenkbaren Eingangstor und einem verschwenkbaren Ausgangstor, und eine auf der Säule und der Torsäule angeordneten Brücke. Der Melkstand weist eine Antriebsanordnung, welche innerhalb der Brücke angeordnet und mit dem Eingangstor und dem Ausgangstor gekoppelt ist, auf.

Auf diese Weise wird ein kompakter Aufbau des Melkstands ermöglicht. Die Antriebsanordnung ist in der Brücke an einem Ort oberhalb des Melkstands und oberhalb eines in dem Melkstand befindlichen, zu melkenden Tieres angebracht. Sämtliche Bauteile, die zur Verschwenkung der Tore erforderlich sind, einschließlich der Antriebsanordnung, befinden sich damit außerhalb der Reichweite des zu melkenden Tieres. Damit wird eine Verletzungsgefahr des zu melkenden Tieres erheblich vermindert.

Zugleich wird auch eine Beschädigungsmöglichkeit der Antriebsanordnung mit den zugehörigen Bauteilen, z.B. durch Tritte des zu melkenden Tieres, erheblich reduziert, da das zu melkende Tier diese nicht erreichen kann. Damit kann sich auch ein Durchsatz erhöhen. Weiterhin sind die Antriebe gegen Verschmutzung geschützt (bei Verwendung von Druckluftzylindern: verschmutzte Kolbenstangen, beispielsweise auch durch Fliegenkot, können zu defekten Kolbenstangendichtungen am Druckluftzylinder führen).

Es ist weiterhin vorteilhaft für einen kompakten Aufbau, dass das Eingangstor mit einer vertikal angeordneten Eingangstorwelle drehfest verbunden ist, und dass das Ausgangstor mit einer vertikal angeordneten Ausgangstorwelle drehfest verbunden ist. Auf diese Weise können die Eingangstorwelle und die Ausgangstorwelle mit ihren jeweiligen Antriebsenden nicht nur an der Brücke gelagert werden, sondern auch in sie hervorstehen, um eine einfache Kopplung mit den Getrieben zu ermöglichen.

So ist in einer noch weiteren Ausführung vorteilhaft vorgesehen, dass die Eingangstorwelle mit dem mindestens einen Hebel des ersten Getriebes drehfest verbunden ist, und dass die Ausgangstorwelle mit dem mindestens einen Hebel des zweiten Getriebes drehfest verbunden ist.

In einer anderen Ausführung ist die Eingangstorwelle auf einer vertikalen Längsseite eines Trägerkörpers der Torsäule angeordnet, und die Ausgangstorwelle ist auf der anderen vertikalen Längsseite des Trägerkörpers der Torsäule angeordnet. Damit können die beweglichen, drehbaren Teile, nämlich die Torwellen, in einem engen und kompakten Aufbau auch im Wesentlichen außerhalb der Reichweite eines zu melkenden Tieres angeordnet werden.

Für einen besonders vorteilhaften flachen Aufbau können der Eingangstorantrieb und der Ausgangstorantrieb längs innerhalb der Brücke angeordnet sein.

Ein weiterer Vorteil eines kompakten Aufbaus kann dadurch ermöglicht werden, dass der mindestens eine Hebel des ersten Getriebes und der mindestens eine Hebel des zweiten Getriebes innerhalb der Brücke übereinander angeordnet sind.

In einer weiteren Ausführung können der Eingangstorantrieb und der Ausgangstorantrieb als Druckluftzylinder oder/und Hydraulikzylinder ausgebildet sein. Dies ergibt einen kompakten und einfachen Aufbau.

Es ist möglich, dass die Getriebe nicht nur mit einem Hebel, sondern mit mehreren Hebeln zur Anpassung an unterschiedliche Drehmomente und Einbausituationen ausgebildet sein können.

Jedes Getriebe bzw. jeder Torantrieb kann zusätzliche Anschläge, insbesondere verstellbare Anschläge, zur Festlegung der geöffneten und geschlossenen Positionen der Tore aufweisen. Solche Anschläge können auch mit elektrischen oder pneumatischen bzw. hydraulischen Schaltern zum Abschalten der Antriebe in den Endpositionen ausgerüstet sein.

Weitere Vorteile und Einzelheiten gehen aus dem in den Figuren der Zeichnung dargestellten Ausführungsbeispiel hervor. Hierbei zeigen:
- Figur 1-2: schematische Perspektivansichten eines beispielhaften Melkstands;
- Figur 3: eine schematische Draufsicht des Melkstands nach Figur 1 und 2; und
- Figur 4-7: schematische Perspektivansichten von Melkstandtoren in verschiedenen Positionen.

Die Begriffe "oben", "unten", "links", "rechts" beziehen sich auf die jeweilige Anordnung in den Figuren.

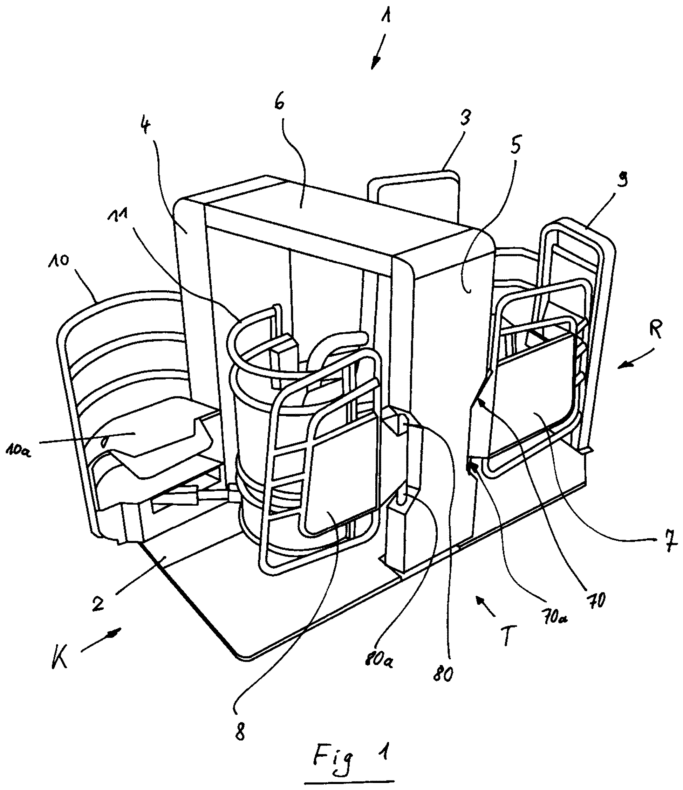

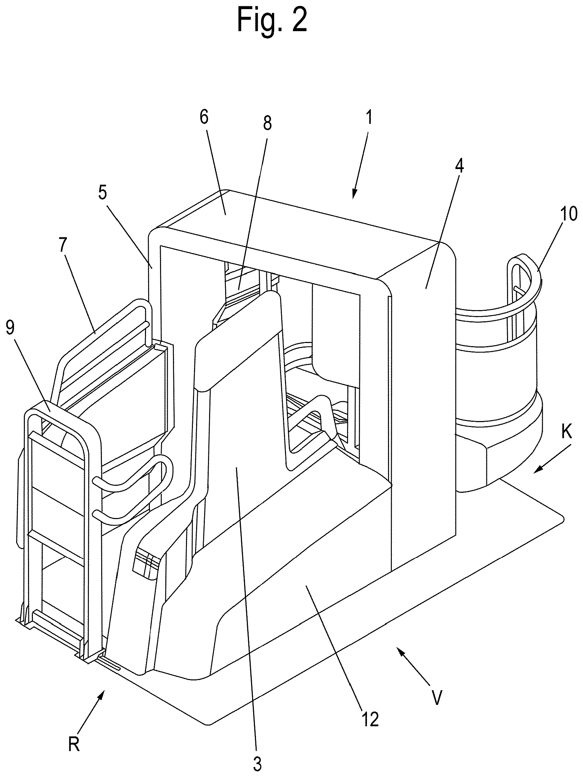

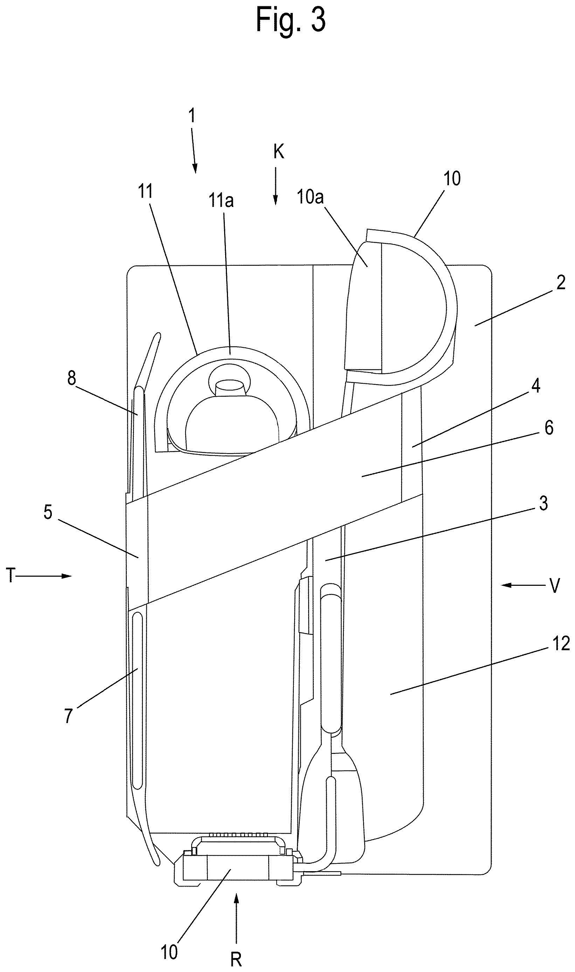

Figur 1 und 2 zeigen schematische Perspektivansichten eines beispielhaften Melkstands 1. Dabei stellt Figur 1 eine Ansicht von einer Torseite T da, wobei Figur 2 eine Ansicht einer gegenüberliegenden Seite, die hier als Versorgungsseite V bezeichnet wird, zeigt. In Figur 3 ist eine schematische Draufsicht des Melkstands 1 nach Figur 1 und 2 gezeigt.

Der Melkstand 1 ist als ein Einzelmelkstand mit einer Kopfseite K, einer Rückseite R, einer Versorgungsseite V und einer Torseite T ausgebildet. Die Kopfseite K und die Rückseite R bilden Schmalseiten des Melkstands 1 und liegen gegenüber, wobei die Versorgungsseite V und die Torseite T gegenüberliegend die Längsseiten des Melkstands 1 bilden.

Der Melkstand 1 umfasst eine Bodenplatte 2, eine Fußplatte 2a, eine Melkeinheit 3, eine Säule 4, eine Torsäule 5, eine Brücke 6, zwei Melkstandtore, von denen eines als Eingangstor 7 und ein anderes als Ausgangstor 8 genannt werden, ein rückwärtiges Gatter 9, ein vorderes Seitengatter 10, ein Trogtor 11 und eine Versorgungseinheit 12 (siehe Figur 2 und 3).

Die Bodenplatte 2 bildet eine Bodenstruktur des Melkstands 1 und z.T. eine Basis für verschiedene Melkstandkomponenten, wie z.B. die Melkeinheit 3, die Säule 4, das rückwärtige Gatter 9, das vordere Seitengatter 10 und die Versorgungseinheit 12.

Die Melkeinheit 3 mit der Versorgungseinheit 12, die Säule 4 und das vordere Seitengatter 10 bilden eine Begrenzung des Melkstands 1 zur Versorgungsseite V. Die gegenüberliegende Torseite T wird durch die Torsäule 5 und die an der Torsäule 5 verschwenkbar befestigten Melkstandtore 7 und 8 begrenzt. Das Eingangstor 7 bildet eine Begrenzung der Torseite T zwischen der Torsäule 5 und der Rückseite R. Eine Begrenzung der Torseite T zwischen der Torsäule 5 und der Kopfseite K wird durch das Ausgangstor 8 gebildet. Die Rückseite R ist zwischen dem Eingangstor 7 und der Melkeinheit 3 durch das rückwärtige Gatter 10 verschlossen, wobei auf der Kopfseite K eine Begrenzung durch das Trogtor 11 gebildet ist.

Die Säule 4 und die Torsäule 5 sind an ihren Oberseiten durch die Brücke 6 verbunden. Die Brücke 6 verläuft schräg in einem Winkel von ungefähr 70° zu einer Längsachse des Melkstands 1. Dabei ist die Torsäule 5 etwa in der Mitte der Torseite T angeordnet, wobei die andere Säule 4 etwa im vorderen Viertel zur Kopfseite K hin im Bereich der Versorgungsseite V angeordnet ist.

Ein zu melkendes Tier, z.B. eine Kuh, betritt den Melkstand 1 durch das geöffnete Eingangstor 7 von der Torseite T her. Dann wird das Eingangstor 7 geschlossen. Das Tier steht dann mit seinem Kopf zur Kopfseite des Melkstands 1 ausgerichtet in dem Melkstand 1 und wird dann mittels eines nicht gezeigten Melkroboters, der in der Melkeinheit 3 untergebracht ist, gemolken. Dabei kann das Tier Futter in einem Trog 11a in dem Trogtor 11 erhalten. Das Futter kann individuell für jedes Tier zusammengestellt und in den Trog 11a, z.B. von verschiedenen Vorratsbehältern aus/an/über der Säule 4 eingeleitet werden. Dies ist hier nicht gezeigt, aber leicht vorstellbar.

Nach dem Melkvorgang werden das Ausgangstor 8 und das Trogtor 11 geöffnet, das Tier kann den Melkstand 1 über die Torseite T und die Kopfseite K wieder verlassen. Wenn das Trogtor 11 geöffnet wird, schwenkt es so zur Versorgungsseite V an das vordere Seitengatter 10, dass eine an dem Seitengatter 10 befestigte Abdeckung 10a den Trog 11a abdeckt. So wird das Tier nicht weiter durch eventuell in dem Trog verbleibendes Futter im Melkstand 1 zurückgehalten.

Die Funktion und der Aufbau des Melkroboters, seine Unterbringung in der Melkeinheit 3 und der Aufbau der Melkeinheit 3 sind in dem Dokument WO 2013/135842 A1 ausführlich beschrieben, worauf hier verwiesen wird. Die Versorgungseinheit 12 dient zur Versorgung der Melkeinheit 3 mit Energie (Elektrizität, Druckluft, Reinigungsfluide etc.) und zum Abtransport der gemolkenen Milch. Zudem weist die Versorgungseinheit 12 eine oder mehrere Steuerungseinrichtungen für den Melkroboter, Torantriebe u.dgl. auf.

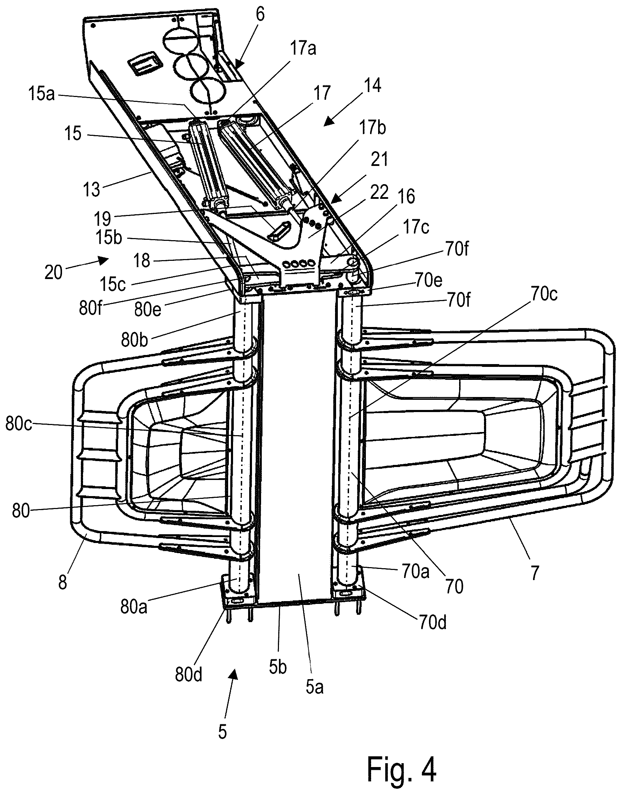

Die Figuren 4-7 zeigen schematische Perspektivansichten der Melkstandtore 7, 8 in verschiedenen Positionen. Die Torsäule 5 ist hier zur besseren Übersicht ohne Abdeckungen bzw. Verkleidungen dargestellt. Die Brücke 6 weist ein Gehäuse 13, dessen Deckel ebenfalls hier nicht gezeigt ist, und eine plattenförmige Verstrebung 22 auf. Die Säule 4 ist in den Figuren 4-7 nicht dargestellt.

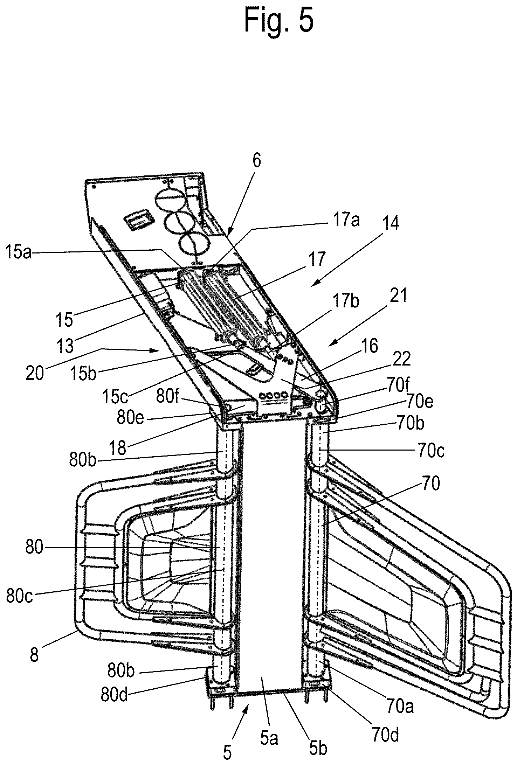

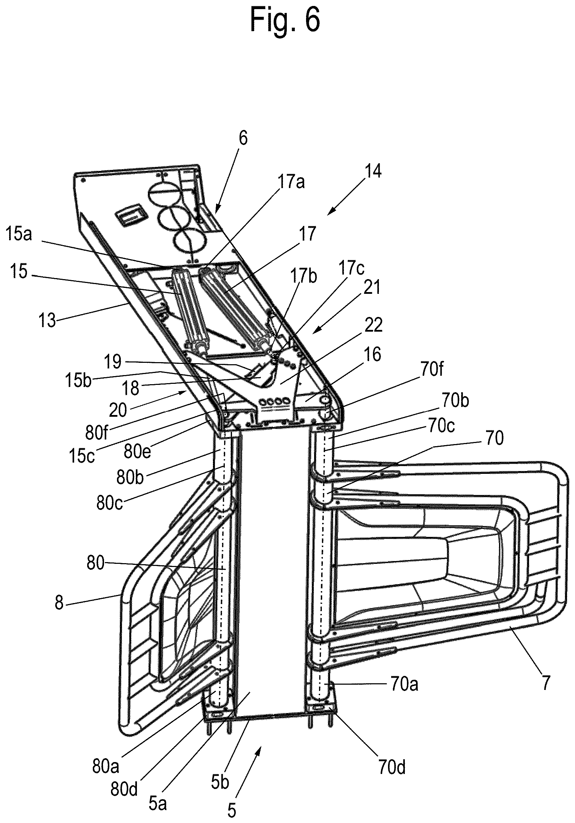

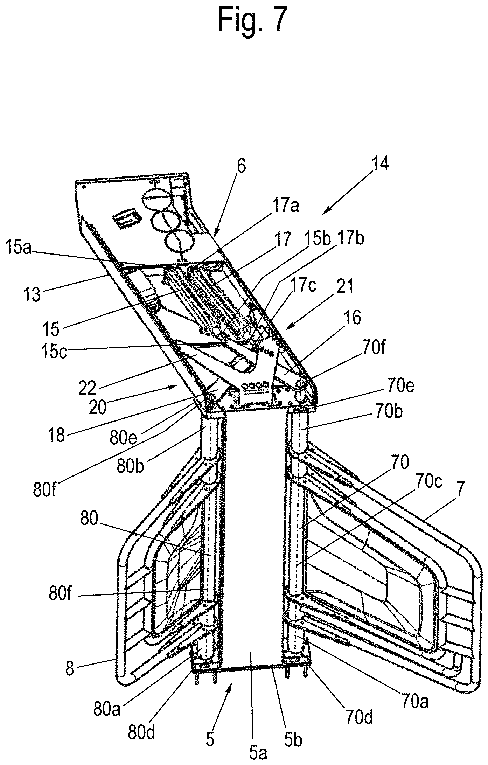

In Figur 4 sind das Eingangstor 7 und das Ausgangstor 8 geschlossen. Figur 5 zeigt eine geöffnete Position des Eingangstores 7, und Figur 6 stellt eine geöffnete Position des Ausgangstores 8 dar. In Figur 7 sind sowohl das Eingangstor 7 als auch das Ausgangstor 8 geöffnet.

Die Torsäule 5 weist einen mittleren quaderförmigen Tragkörper 5a auf, der senkrecht angeordnet ist. Eine Breite des Tragkörpers 5a in einer Längsrichtung des Melkstands 1 ist kürzer als eine Breite der Brücke 6.

Der Tragkörper ist mit seiner Unterseite auf einer Basis 5b befestigt. Die Basis 5b ist ihrerseits mit nicht näher bezeichneten Befestigungsmitteln auf dem Boden bzw. der Bodenplatte 2 oder einer weiteren Platte angebracht. Die Oberseite des Tragkörpers 5a ist in ebenfalls nicht näher dargestellter Weise mit dem zur Torseite T weisenden Ende der Brücke 6 verbunden.

Beidseitig des Tragkörpers 5a ist jeweils eine Welle angeordnet, an welcher jeweils ein Melkstandtor befestigt ist.

So ist das Eingangstor 7 an einer Eingangstorwelle 70 angebracht. Die Eingangstorwelle 70 weist ein unteres Ende mit einem Lagerabschnitt 70a und ein oberes Ende mit einem Antriebsabschnitt 70b auf. Die Eingangstorwelle 70 ist an der in den Figuren 4-7 gezeigten rechten vertikalen Seite des Tragkörpers 5a vertikal angeordnet und weist eine Eingangstorachse 70c auf, um welche sie in Lagern 70d und 70e drehbar ist. Das Lager 70d ist neben dem Tragkörper 5a auf der Basis 5b befestigt, und das andere Lager 70e ist an der Unterseite des Gehäuses 13 der Brücke 6 neben der Befestigung des Gehäuses 13 auf der Oberseite des Tragkörpers 5a angebracht.

In ähnlicher Weise ist das Ausgangstor 8 mit einer Ausgangstorwelle 80 verbunden. Auch die Ausgangstorwelle 80 weist ein unteres Ende mit einem Lagerabschnitt 80a und ein oberes Ende mit einem Antriebsabschnitt 80b auf. Die Ausgangstorwelle 80 ist auf der anderen vertikalen Seite des Tragkörpers 5a wie die Eingangstorwelle 7 in Lagern 80d und 80e um eine Ausgangstorachse 80c der Ausgangstorwelle 80 verdrehbar angebracht.

Das jeweilige obere Ende des Antriebsabschnitts 70b der Eingangstorwelle 70 und des Antriebsabschnitts 80b der Ausgangstorwelle 80 erstrecken sich durch die jeweiligen Lager 70e und 80e hindurch nach oben und stehen jeweils als ein Antriebsende 70f und 80f in das Innere des Gehäuses 13 der Brücke 6 hervor.

In der Brücke 6 ist eine Antriebsanordnung 14 eingebaut, welche zur Verschwenkung des Eingangstores 7 und des Ausgangstores 8 vorgesehen ist. Mit der Antriebsanordnung 14 ist es möglich, das Eingangstor 7 und das Ausgangstor 8 individuell zu verschwenken. Mit anderen Worten, das Eingangstor 7 und das Ausgangstor 8 können unabhängig voneinander geöffnet und geschlossen werden. Diese unterschiedlichen Positionen sind in den Figuren 4-7 dargestellt.

Die Antriebsanordnung 14 umfasst in diesem Ausführungsbeispiel einen Eingangstorantrieb 15 mit einem Getriebe 20 und einen Ausgangstorantrieb 17 mit einem Getriebe 21.

Der Eingangstorantrieb 15 und der Ausgangstorantrieb 17 sind hier als Druckluftzylinder ausgebildet und längs in der Brücke 6 in dem Gehäuse 13 angeordnet. Der Eingangstorantrieb 15 ist über ein Lager 15a in dem Gehäuse 13 der Brücke 6 verschwenkbar angebracht. Ein Ende seiner Kolbenstange 15b ist mit dem zugehörigen Getriebe 20 gekoppelt. In gleicher Weise ist der Ausgangstorantrieb 17 über ein Lager 17a in dem Gehäuse 13 der Brücke 6 angelenkt, wobei eine Ende der Kolbenstange 17b des Ausgangstorantriebs 17 mit dem zugehörigen Getriebe 21 gekoppelt ist.

Die Getriebe 20 und 21 sind hier als Hebelgetriebe ausgebildet. Das Getriebe 20 umfasst einen Hebel 16, welcher mit einem Ende mit dem Ende der Kolbenstange 15b des Eingangstorantriebs 15 in einem Abtriebslager 15c verschwenkbar gekoppelt ist. Das andere Ende des Hebels 16 ist verdrehsicher an dem Antriebsende 70f der Eingangstorwelle 70 verbunden. In ähnlicher Weise umfasst das andere Getriebe 21 auch einen Hebel 18. Das eine Ende des Hebels 18 ist mit dem Ende der Kolbenstange 17b des Ausgangstorantriebs 17 in einem Abtriebslager 17c verschwenkbar gekoppelt, und das andere Ende des Hebels 18 ist verdrehsicher mit dem Antriebsende 80f der Ausgangstorwelle 80 verbunden.

In diesem Ausführungsbeispiel sind die Hebel 16 und 18 übereinander angeordnet. In der in Figur 4 gezeigten geschlossenen Positionen beider Tore 7, 8 sind beide Hebel 16, 18 im Wesentlichen parallel zu der Breitseite der Brücke 6. Jeder Hebel 16, 18 fluchtet in etwa mit dem zugehörigen Tor 7, 8 derart, dass jeder Hebel 16, 18 in eine entgegengesetzte Richtung des zugehörigen Tors 7, 8 weist. So weist das Eingangstor 7 in Figur 4 nach rechts parallel zu der Längsseite der Torseite T des Melkstands 1, wobei der zugehörige Hebel 16 nach links verläuft. Im Fall des Ausgangstores 8 ist es umgekehrt.

In der in Figur 4 gezeigten Positionen des Eingangstores 7 und des Ausgangstores 8 sind die Kolbenstange 15b des Eingangstorantriebs 15 und die Kolbenstange 17b des Ausgangstorantriebs 17 ausgefahren.

Wenn das Eingangstor 7 geöffnet ist (Figur 5), ist die Kolbenstange 15b des Eingangstorantriebs 15 eingefahren und der Hebel 16 mit dem Eingangstor 7 um die Eingangstorachse 70c von oben gesehen im Uhrzeigersinn verschwenkt. In dieser Position kann der Hebel 16 an einem nicht gezeigten Anschlag anliegen, durch welchen die geöffnete Position des Eingangstores 7 festgelegt sein kann. Dieser nicht gezeigte Anschlag kann z.B. an einer Unterseite der plattenförmigen Verstrebung 22 angebracht sein.

Figur 6 zeigt die Position des geöffneten Ausgangstores 8. Die Kolbenstange 17b des Ausgangstorantriebs 17 ist eingefahren. Der Hebel 18 ist mit dem Ausgangstor 8 um die Ausgangstorachse 80c von oben gesehen im Gegenuhrzeigersinn verschwenkt. In dieser Position liegt der Hebel 18 an einem Anschlag 19 an. Der Anschlag 19 kann die geöffnete Position des Eingangstores 8 festlegen.

Es ist auch möglich, dass sowohl das Eingangstor 7 als auch das Ausgangstor 8 geöffnet sind, wie dies in Figur 7 gezeigt ist. Diese Situation kann z.B. in dem Fall vorhanden sein, wenn eine Kuh den Melkstand 1 gerade verlässt und eine nächste Kuh schon in den Melkstand 1 kommt.

Die Antriebsanordnung 14 ist in der Brücke 16 an einem Ort oberhalb des Melkstands 1 und oberhalb eines in dem Melkstand 1 befindlichen, zu melkenden Tieres. Sämtliche Bauteile, die zur Verschwenkung der Tore 7, 8 erforderlich sind, einschließlich der Antriebsanordnung 14, befinden sich damit außerhalb der Reichweite des zu melkenden Tieres. Damit wird eine Verletzungsgefahr des zu melkenden Tieres erheblich vermindert. Zugleich wird auch eine Beschädigungsmöglichkeit der Antriebsanordnung 14 mit den zugehörigen Bauteilen, z.B. durch Tritte des zu melkenden Tieres, erheblich reduziert, da das zu melkende Tier diese nicht erreichen kann.

Eine Steuerung der Antriebsanordnung 14 kann beispielsweise in dem Fall von Druckluftzylindern über Ventile erfolgen, die sich auch in der Brücke 6 befinden. Diese Ventile können durch Steuerluft über Steuerventile in der Versorgungseinheit angesteuert werden.

Das oben beschriebene Ausführungsbeispiel schränkt die Erfindung nicht ein, sondern sie ist im Rahmen der beigefügten Ansprüche modifizierbar.

So ist es z.B. denkbar, dass der Anschlag 19 des Hebels 18 und der nicht gezeigte Anschlag des Hebels 16 auch elektrische oder pneumatische Schaltelemente besitzen, welche den jeweiligen Antrieb 15, 17 automatisch in der jeweiligen Endstellung ausschalten.

Anstelle von Druckluftzylindern sind auch Hydraulikzylinder oder elektromotorische Verstellantrieb mit Gewindespindeln und Muttern denkbar.

Es ist auch denkbar, dass die Getriebe 20, 21 anstelle von Hebeln 16, 18 andere Getriebearten, wie beispielsweise Zahnradgetriebe, aufweisen können. Es ist auch ein Zahnstangengetriebe denkbar.

Eine weitere Möglichkeit besteht darin, dass die Getriebe 20, 21 mehrere Hebel 16, 18 aufweisen.

### Bezugszeichen

- 1: Melkstand
- 2: Bodenplatte
- 3: Melkeinheit
- 4: Säule
- 5: Torsäule
- 5a: Tragkörper
- 5b: Basis
- 6: Brücke
- 7: Eingangstor
- 8: Ausgangstor
- 9: Gatter
- 10: Seitengatter
- 10a: Abdeckung
- 11: Trogtor
- 11a: Trog
- 12: Versorgungseinheit
- 13: Gehäuse
- 14: Antriebsanordnung
- 15: Eingangstorantrieb
- 15a: Lager
- 15b: Kolbenstange
- 15c: Abtriebslager
- 16: Hebel
- 17: Ausgangstorantrieb
- 17a: Lager
- 17b: Kolbenstange
- 17c: Abtriebslager
- 18: Hebel
- 19: Anschlag
- 20, 21: Getriebe
- 22: Verstrebung

- 70: Eingangstorwelle
- 70a: Lagerabschnitt
- 70b: Antriebsabschnitt
- 70c: Eingangstorachse
- 70d, 70e: Lager
- 70f: Antriebsende

- 80: Ausgangstorwelle
- 80a: Lagerabschnitt
- 80b: Antriebsabschnitt
- 80c: Ausgangstorachse
- 80d, 80e: Lager
- 80f: Antriebsende

- K: Kopfseite
- R: Rückseite
- T: Torseite
- V: Versorgungsseite

## Patentansprüche

1. Melkstand (1) zum Melken von milchgebenden Tieren, mit einer Säule (4), einer Torsäule (5) mit einem verschwenkbaren Eingangstor (7) und einem verschwenkbaren Ausgangstor (8), und einer auf der Säule (4) und der Torsäule (5) angeordneten Brücke (6), wobei der Melkstand (1) eine Antriebsanordnung (14) aufweist, die mit dem Eingangstor (7) und dem Ausgangstor (8) gekoppelt ist und die einen Eingangstorantrieb (15) und einen Ausgangstorantrieb (17) aufweist, **dadurch gekennzeichnet, dass**
die Antriebsanordnung (14) innerhalb der Brücke (6) angeordnet ist, und dass das Eingangstor (7) über ein erstes Getriebe (20) mit dem Eingangstorantrieb (15) verschwenkbar gekoppelt ist und das Ausgangstor (8) über ein zweites Getriebe (21) mit dem Ausgangstorantrieb (17) verschwenkbar gekoppelt ist, wobei das erste Getriebe (20) ein Hebelgetriebe mit mindestens einem Hebel (16) aufweist und das zweite Getriebe (21) ein Hebelgetriebe mit mindestens einem Hebel (18) aufweist.

2. Melkstand (1) nach Anspruch 1, **dadurch gekennzeichnet, dass** das Eingangstor (7) mit einer vertikal angeordneten Eingangstorwelle (70) drehfest verbunden ist, und dass das Ausgangstor (8) mit einer vertikal angeordneten Ausgangstorwelle (80) drehfest verbunden ist.

3. Melkstand (1) nach Anspruch 2, **dadurch gekennzeichnet, dass** die Eingangstorwelle (70) mit dem mindestens einen Hebel (16) des ersten Getriebes (20) drehfest verbunden ist, und dass die Ausgangstorwelle (80) mit dem mindestens einen Hebel (18) des zweiten Getriebes (21) drehfest verbunden ist.

4. Melkstand (1) nach Anspruch 3, **dadurch gekennzeichnet, dass** die Eingangstorwelle (70) auf einer vertikalen Längsseite eines Trägerkörpers (5a) der Torsäule (5) angeordnet ist, und dass die Ausgangstorwelle (80) auf der anderen vertikalen Längsseite des Trägerkörpers (5a) der Torsäule (5) angeordnet ist.

5. Melkstand (1) nach Anspruch 4, **dadurch gekennzeichnet, dass** der Eingangstorantrieb (15) und der Ausgangstorantrieb (17) längs innerhalb der Brücke (6) angeordnet sind.

6. Melkstand (1) nach Anspruch 5, **dadurch gekennzeichnet, dass** der mindestens eine Hebel (16) des ersten Getriebes (20) und der mindestens eine Hebel (18) des zweiten Getriebes (21) innerhalb der Brücke (6) übereinander angeordnet sind.

7. Melkstand (1) nach einem der Ansprüche 1 bis 6, **dadurch gekennzeichnet, dass** der Eingangstorantrieb (15) und der Ausgangstorantrieb (17) als Druckluftzylinder oder/und Hydraulikzylinder ausgebildet sind.

8. Melkstand (1) nach einem der Ansprüche 1 bis 7, **dadurch gekennzeichnet, dass** der Melkstand (1) zum automatisierten Melken von milchgebenden Tieren eingerichtet ist.

## Claims

1. A milking parlor (1) for milking dairy animals, with a pillar (4), a gate pillar (5) with a pivoting entrance gate (7) and a pivoting exit gate (8), and a bridge (6) mounted on the pillar (4) and the gate pillar (5), wherein the milking parlor (1) comprises a driving assembly (14) which is coupled to the entrance gate (7) and the exit gate (8) and which comprises an entrance gate drive (15) and an exit gate drive (17), **characterized in that** the driving assembly (14) is mounted inside the bridge (6), and that the entrance gate (7) is pivotally coupled to the entrance gate drive (15) via a first gearing (20) and the exit gate (8) is pivotally coupled to the exit gate drive (17) via a second gearing (21), wherein the first gearing (20) comprises a lever gearing with at least one lever (16), and the second gearing (21) comprises a lever gearing with at least one lever (18).

2. The milking parlor (1) as claimed in claim 1 **characterized in that** the entrance gate (7) is connected secured against rotation to a vertically mounted entrance gate shaft (70), and that the exit gate (8) is connected secured against rotation to a vertically mounted exit gate shaft (80).

3. The milking parlor (1) as claimed in claim 2, **characterized in that** the entrance gate shaft (70) is connected secured against rotation to the at least one lever (16) of the first gearing (20), and that the exit gate shaft (80) is connected secured against rotation to the at least one lever (18) of the second gearing (21).

4. The milking parlor (1) as claimed in claim 3 **characterized in that** the entrance gate shaft (70) is mounted on a vertical longitudinal side of a support body (5a) of the gate pillar (5), and that the exit gate shaft (80) is mounted on the other vertical longitudinal side of the support body (5a) of the gate pillar (5).

5. The milking parlor (1) as claimed in claim 4 **characterized in that** the entrance gate drive (15) and the exit gate drive (17) are mounted lengthwise inside the bridge (6).

6. The milking parlor (1) as claimed in claim 5 **characterized in that** the at least one lever (16) of the first gearing (20) and the at least one lever (18) of the second gearing (21) are arranged one above the other inside the bridge (6).

7. The milking parlor (1) as claimed in one of claims 1 to 6 **characterized in that** the entrance gate drive (15) and the exit gate drive (17) are designed as a compressed air cylinder and/or hydraulic cylinder.

8. The milking parlor (1) as claimed in one of claims 1 to 7 **characterized in that** the milking parlor (1) is set up for the automated milking of dairy animals.

## Revendications

1. Box de traite (1) pour la traite d'animaux laitiers, avec un montant (4), un montant de porte (5) avec une porte d'entrée pivotante (7) et une porte de sortie pivotante (8), et un portique (6) disposé sur le montant (4) et le montant de porte (5), lequel box de traite (1) comporte un dispositif d'entraînement (14) qui est couplé avec la porte d'entrée (7) et la porte de sortie (8) et qui présente un entraînement de porte d'entrée (15) et un entraînement de porte de sortie (17), **caractérisé en ce que** le dispositif d'entraînement (14) est disposé à l'intérieur du portique (6) et **en ce que** la porte d'entrée (7) est couplée de façon pivotante à l'entraînement de porte d'entrée (15) par un premier engrenage (20) et la porte de sortie (8) est couplée de façon pivotante avec l'entraînement de porte de sortie (17) par un deuxième engrenage (21), le premier engrenage (20) comportant un engrenage à leviers pourvu d'au moins un levier (16) et le deuxième engrenage (21) un engrenage à leviers pourvu d'au moins un levier (18).

2. Box de traite (1) selon la revendication 1, **caractérisé en ce que** la porte d'entrée (7) est reliée de façon solidaire en rotation à un axe de porte d'entrée (70) disposé verticalement et **en ce que** la porte de sortie (8) reliée de façon solidaire en rotation à un axe de porte de sortie (80) disposé verticalement.

3. Box de traite (1) selon la revendication 2, **caractérisé en ce que** l'axe de porte d'entrée (70) est reliée de façon fixe en rotation à l'au moins un levier (16) du premier engrenage (20) et **en ce que** l'axe de porte de sortie (80) est relié de façon fixe en rotation à l'au moins un levier (18) du deuxième engrenage (21).

4. Box de traite (1) selon la revendication 3, **caractérisé en ce que** l'axe de porte d'entrée (70) est disposé sur un côté longitudinal vertical d'un corps portant (5a) du montant de porte (5) et **en ce que** l'axe de porte de sortie (80) est disposé sur l'autre côté longitudinal vertical du corps portant (5a) du montant de porte (5).

5. Box de traite (1) selon la revendication 4, **caractérisé en ce que** l'entraînement de porte d'entrée (15) et l'entraînement de porte de sortie (17) sont disposés longitudinalement à l'intérieur du portique (6).

6. Box de traite (1) selon la revendication 5, **caractérisé en ce que** l'au moins un levier (16) du premier entraînement (20) et l'au moins un levier (18) du deuxième entraînement (21) sont disposés l'un au-dessus de l'autre à l'intérieur du portique (6).

7. Box de traite (1) selon l'une des revendications 1 à 6, **caractérisé en ce que** l'entraînement de porte d'entrée (15) et l'entraînement de porte de sortie (17) sont conçus comme des vérins pneumatiques et/ou des vérins hydrauliques.

8. Box de traite (1) selon l'une des revendications 1 à 7, **caractérisé en ce que** le box de traite (1) est aménagé en vue de la traite automatique d'animaux laitiers.
